Europäisches Patentamt

European Patent Office

Office européen des brevets

(11) Publication number: **0 267 682**
**A1**

# (12) EUROPEAN PATENT APPLICATION

(21) Application number: **87308587.2**

(22) Date of filing: **29.09.87**

(51) Int. Cl.4: **C03C 10/16**

(30) Priority: **13.10.86 FR 8614176**
**10.04.87 US 37042**

(43) Date of publication of application:
**18.05.88 Bulletin 88/20**

(84) Designated Contracting States:
**AT BE CH DE ES FR GB IT LI LU NL SE**

(71) Applicant: **Corning Glass Works**
**Sullivan Park FR-212**
**Corning New York 14831(US)**

(72) Inventor: **Andrieu, André**
**3 Avenue de Stalingrad**
**Nemours(FR)**
Inventor: **Mazeau, Jean-Pierre**
**Les pré de Vulaines 50 voie de la Liberté**
**Samoreau Avon(FR)**
Inventor: **Guiot de la Rochère Marie**
**Jacqueline Monique**
**2 rue Saint Honoré**
**Fontainebleau(FR)**

(74) Representative: **Smith, Sydney et al**
**Elkington and Fife High Holborn House 52/54**
**High Holborn**
**London WC1V 6SH(GB)**

(54) Glass-ceramic article process for its production and thermally crystallizable glass.

(57) This invention relates to the preparation of highly crystalline glass-ceramic articles wherein potassium fluorrichterite constitutes essentially the sole crystal phase. The precursor glasses can be crystallized in situ very rapidly and exhibit very little thermal deformation during the crystallization heat treatment. The base glasses are essentially free of $Li_2O$ and consist essentially, expressed in terms of weight percent on the oxide basis, of:

| | | | |
|---|---|---|---|
| $SiO_2$ | 61-70 | $Na_2O$ | 1.5-3 |
| $Al_2O_3$ | 2.75-7 | $K_2O$ | 2.5-5 |
| $MgO$ | 12.5-16 | $Na_2O+K_2O$ | <7 |
| $CaO$ | 4.75-9 | $F$ | 2-4 |

# GLASS-CERAMIC ARTICLE, PROCESS FOR ITS PRODUCTION AND THERMALLY CRYSTALLIZABLE GLASS

This invention relates to a glass-ceramic article, to a process for its production, and to a thermally crystallizable glass.

Glass-ceramic articles are traditionally prepared through the closely controlled heat treatment of precursor glass articles. On that account, glass-ceramic articles are customarily produced by following three general steps: first, a vitrifiable batch of a predetermined composition is melted; second, this molten mass is cooled to a temperature at least in the limits, and normally below, the transformation range and simultaneously made into the form of a glass article having a desired configuration; and, third, this glass article is exposed to a predetermined heat treatment in order to cause the generation of crystals in situ. (The transformation range has been defined as the temperature at which a molten material is transformed into an amorphous mass; this temperature in general being estimated as being in the vicinity of the annealing point of a glass.)

The initial glass article is often subjected to a two-stage crystallization heat treatment. This practice provides for heating the glass article to a temperature within the limits, or a little above, the transformation range for a period of time sufficient to effect the development of a multitude of nuclei in the glass. Thereafter, the temperature is raised to levels which approach, and ordinarily go beyond, the softening point of the glass in order to cause the growth of crystals on those nuclei. The crystals produced during the two stage heat treatment are usually more uniform in size and the final articles are generally more extensively crystalline.

It is well known that, when a glass article is heated to a temperature above its transformation range, the viscosity of the glass becomes sufficiently low so that the article becomes susceptible to thermal deformation. The severity of this phenomenon obviously increases as the temperature approaches the softening point of the glass and goes beyond it.

The crystals developed in a glass-ceramic exhibit a melting point higher than the softening point of the precursor glass. Consequently, by causing crystallization in situ during the heat treatment of a parent glass article in order to convert it into a glass-ceramic, care must be taking in raising the temperature above the transformation range of the glass to develop sufficient crystallization in order to provide an adequate internal structure to support the article, thereby minimizing thermal deformation. One must also realize that the composition of the glass remaining in the article continually changes as its components become an integral part of the crystals during the heat treatment process. In most cases the viscosity of the residual glass is greater than that of the parent glass; i.e., its transformation range is higher than that of the parent glass. Nevertheless, thermal deformation is an ever present problem; particularly with articles having two dimensions which are large but have narrow cross sections, such as dinner plates. Such products have required the use of formers or supports during the heat treatment of the precursor glass article in order to assure the desired geometry in the final product.

Furthermore, the in situ crystallization of a glass article is effected more rapidly and to a greater extent as the temperature is raised above the transformation range and into the region of the softening point of the glass. Consequently, for reasons of industrial economy, it is necessary to raise the temperature of crystallization as rapidly as possible up to a temperature as high as possible. Such practice obviously increases the risk of thermal deformation of the precursor glass article. Therefore, continued research has been carried out to discover glass compositions capable of rapid in situ crystallization and exhibiting only minimum, and preferably practically no, thermal deformation. These researches have been particularly active in the area of tableware articles where a primary objective has been to remove the need for formers to support the articles during the heat treatment of the parent glass bodies.

## Summary of the Invention

The Applicants were able to achieve that objective through the discovery of a very narrow range of glass compositions in the system $K_2O$-$Na_2O$-$MgO$-$CaO$-$SiO_2$-$Al_2O_3$-$F$, which compositions can be rapidly crystallized in situ to glass-ceramics wherein potassium fluorrichterite constitutes essentially the sole crystal phase. The degree of thermal deformation during the crystallization heat treatment of the precursor glass is so little that it is not necessary to use supports to maintain the dimensions of tableware articles, even for table plates having a diameter of about 28 cm. Furthermore, the final glass-ceramic products have a particularly pleasing aesthetic appearance for tableware, exhibiting the slight translucency associated with fine English porcelain. The tableware articles prepared from precursor glass bodies made from the inventive compositions can be heat treated up to complete crystallization by following a program having a duration as short as two hours.

The compositions permitting the above-mentioned objective to be achieved are composed essentially, as analyzed in weight percent on the oxide basis, of:

| | | | |
|---|---|---|---|
| $SiO_2$ | 61-70 | $Na_2O$ | 1.5-3 |
| $Al_2O_3$ | 2.75-7 | $K_2O$ | 2.5-5 |
| MgO | 12.5-16 | $Na_2O+K_2O$ | <7 |
| CaO | 4.75-9 | F | 2-4 |

The inventive compositions undergo a liquid-liquid phase separation when the molten masses are cooled to a glass body (they form dense opal glasses when cooled slowly). It seems that the occurrence of this phase separation, which leads to a large increase in the viscosity of the glass, is a critical factor in obtaining highly crystalline, opaque glass-ceramics exhibiting very little thermal deformation while applying a short crystallization heat treatment. Hence, it has been visually observed that the thermal deformation of the parent glass article during the heat treatment decreases in the proportion that it demonstrates a much greater tendency to phase separation. Moreover, the viscosity measurements carried out during the crystallization heat treatment program have indicated that the phase separated glass bodies retain a higher viscosity during the heat treatment than those which are practically free of phase separation. It is believed that this behavior is due to differences in the viscosities of the residual glass matrices. Likewise, the opacity of the final glass-ceramic increases, in general, in proportion as the phase separation in the precursor glass body is greater.

Laboratory experiments have indicated that when the parent glass bodies are heated above their transformation range ($\approx 600°C$), metastable phases of fluormica (having a formula in the vicinity of $KMg_{2.5}Si_4O_{10}F_2$) associated with diopside ($CaMgSi_2O_6$) are initially formed which are transformed at higher temperatures ($\approx 950°$-$1050°C$) into potassium fluorrichterite.

Up to about 1.5% BaO and 2.5% $P_2O_5$ may be included to reduce the tendency of the glass to devitrify.

Some $As_2O_3$ and/or $Sb_2O_3$ may be present in an amount up to 1% in order to perform their usual role as fining agents.

An amount of $Fe_2O_3$ up to 0.5% produces a slight yellow tint in the glass-ceramic. An amount of 0.15-0.2% yields a color very near to that of English Wedgwood porcelain. Given that the yellow tint is due to the presence of the $Fe^{+3}$ ion, it is preferable to include $As_2O_3$ and/or $Sb_2O_3$ in the batch and an oxidizing ingredient, such as $NaNO_3$, in order to oxidize the glass and stabilize its redox state. It is possible to utilize other conventional colorants for glass, such as $CeO_2$, $CoO$, $Cr_2O_3$, $CuO$, $MnO_2$, $NiO$, $TiO_2$, and $V_2O_5$, in small amounts (typically less than 1% total) in order to adjust the color, chromaticity, and total reflection factor.

$Al_2O_3$, $P_2O_5$, and, to a lesser extent, $SiO_2$ and F favor phase separation. In contrast, alkali metal oxides and, to a lesser extent, alkaline earth metal oxides have a tendency to inhibit phase separation. The following ratio was used as an indicator of the phase separation tendency of a glass composition:

$$R = \frac{Al_2O_3 + P_2O_5}{Na_2O + K_2O}$$

As R increases, the tendency toward phase separation increases with a corresponding reduction in thermal deformation. Experience has established that glasses having an R factor less than about 0.6 normally exhibit a poor phase separation which results in considerable thermal deformation of the parent glass body when it is heat treated to form a glass-ceramic.

The concentrations of MgO and F must be controlled in such a way to avoid thermal deformation of the parent glass. Because MgO is a major constituent of potassium fluorrichterite, too small an amount leads to insufficient crystallization which, in turn, results in excessive thermal deformation. Fluorine favors the desired crystallization, but it also acts as a flux when it is present in the residual glass. In glasses where R<0.9, considerable sagging is observed when the amount of fluorine exceeds 3.25%. That is probably the maximum amount which can be incorporated into the crystals.

The opacity of the final glass-ceramic is strongly dependent upon the amounts of $Al_2O_3$ and the alkali metal oxides. To be more precise, a level of $Al_2O_3$ less than about 2.75% leads to a product of low opacity. Similarly, an increase in the concentration of alkali metal oxides causes a decrease in opacity such that a total content of $Na_2O + K_2O$ of 7% yields a body of very low opacity.

$Li_2O$ should be essentially absent from the composition. Laboratory tests have indicated that the introduction of $Li_2O$ in amounts of about 0.5% frequently leads to fracture of the body during the crystallization heat treatment. This risk is particularly high in compositions which exhibit great phase separation. A theory has been formulated that, because $Li_2O$ favors crystallization of mica phases, the fracture observed is linked to the sudden crystallization of micas at temperatures where the glasses of the invention have a high viscosity.

Glass compositions having R factors greater than 0.6 exhibit opalization liquidi (phase separation liquidi) in the range of 1100°-1360°C (a viscosity of about 10,000 poises and 400 poises, respectively) depending upon the composition. The opalization liquidus increases roughly in proportion to the increase in the R index. Consequently, in order to utilize conventional apparati for the manufacture of glass, R indices not greater than 0.9 are preferred.

The inventive glasses exhibit crystallization liquidi in the temperature range of 1180°-1260°C which correspond, respectively, to viscosities of 3000 poises and 800 poises.

As mentioned previously, the precursor glass bodies can be subjected to very rapid raises in temperature without undergoing substantial thermal deformation. Nevertheless, as is the case with other glass-ceramics, too rapid raises in temperature can lead to great thermal deformation and even breakage. Consequently, in order to guarantee the very minimal thermal deformation, the temperature of the parent glass bodies should be raised from about 700°C to the crystallization range (950°-1050°C) over a period of time of not less than 30 minutes. An exposure period of no greater than 30 minutes in the crystallization range, typically from 10-15 minutes, is sufficient to attain essentially complete crystallization.

Below is specified the preferred area of composition which represents the best compromise between the physical properties of the final product and the melting and forming capabilities of the precursor glass composition. These glasses are particularly advantageous from the standpoint of manufacturing because they exhibit sufficiently high opalization and crystallization liquidus viscosities to be easily formed into glass articles by conventional glass forming techniques. For example, they can be delivered and formed at a viscosity of several hundred poises without excessive devitrification.

| | | | |
|---|---|---|---|
| $SiO_2$ | 63-68 | $K_2O$ | 3.5-4.75 |
| $Al_2O_3$ | 3-4.75 | $Na_2O + K_2O$ | <6.75 |
| MgO | 13-15 | BaO | 0.25-1.25 |
| CaO | 5.25-7.5 | $P_2O_5$ | 0.5-1.5 |
| $Na_2O$ | 2-2.75 | F | 2.25-3.25 |

## Prior Art

U. S. Patent No. 4,467,039 describes the production of glass-ceramic articles containing potassium fluorrichterite as the predominant crystal phase. It has been stated that these articles exhibit great toughness, great mechanical strength, and low thermal deformation and that they are essentially composed, in weight percent, of:

| | | | |
|---|---|---|---|
| $SiO_2$ | 50-70 | $K_2O$ | 2-12 |
| MgO | 8-25 | $Li_2O$ | 0-3 |
| CaO | 4-15 | $Al_2O_3$ | 0-7 |
| $Na_2O$ | 2-9 | F | 3-8 |

Although the broad ranges of components disclosed overlap those of the present invention, there was no recognition of a narrow range of compositions which can be crystallized in situ very rapidly with nearly no thermal deformation. In fact, rates of temperature increases of 200°C/hour to the crystallization temperature and minimum exposure periods of 30 minutes at the crystallization temperature are mentioned. In contrast, the temperature of the glass bodies of the present invention can be raised at rates up to 600°C/hour and these bodies do not require more than 15 minutes at the crystallization temperature to arrive at essentially complete crystallization. No composition of the concrete examples furnished in this patent is within the limits of the products of the present invention.

U. S. Patent No. 4,608,348 describes the preparation of glass-ceramic articles which demonstrate great toughness and very low thermal deformation, which contain potassium fluorrichterite as the predominant crystal phase, but which also contain substantial quantities of cristobalite. Compositions providing such products are composed, essentially, in weight percent, of:

| | | | |
|---|---|---|---|
| $SiO_2$ | 65-69 | $Na_2O$ | 1.5-3.5 |
| $Al_2O_3$ | 0.75-3.5 | $K_2O$ | 4.2-6.0 |
| MgO | 13.5-17.5 | BaO | 0-2.5 |
| CaO | 3-4.8 | $P_2O_5$ | 0-2.5 |
| $Na_2O$ | 0.5-2.0 | F | 3.3-5.5 |

The CaO content is lower than that required in the compositions of the present invention; the F content is higher; and $Li_2O$ is a required component. Furthermore, substantial quantities of cristobalite are desired in the glass-ceramic, whereas the presence of cristobalite is neither required nor desired in the products of the present invention.

Description of Preferred Embodiments

Table I records numerous glass compositions, in parts by weight on the oxide basis, which illustrate the compositional parameters of the present invention. Because the sum of the ingredients in each composition closely approaches 100, for all practical purposes, the values reported may be deemed to reflect weight percent. Since it is not known with which of the cations the fluorine is combined, this last is simply indicated in the table in terms of fluorine, conforming to current practice in the material analysis of glass. The actual ingredients entering into the batch for the preparation of the glass may consist of any materials, whether oxides or other compounds, which, when melted together, will be transformed into the desired oxides in the correct proportions.

About 2500 grams of the batch ingredients are mixed, placed in platinum crucibles, and melted for four hours at 1500°C. The melts are formed into bars of 1 cm thickness and then transferred to an annealer operating at 600°C.

Whereas the compositions given as examples in Table I only reflect studies conducted in a laboratory, it will be realized that the compositions of the examples conforming with the compositional parameters of the invention could be melted and fashioned by means of conventional industrial equipment for melting and forming glass on a large scale. Table I also indicates the R index corresponding to each composition.

## Table I

|  | 1 | 2 | 3 | 4 | 5 | 6 | 7 |
|---|---|---|---|---|---|---|---|
| $SiO_2$ | 66.0 | 66.9 | 65.9 | 66.7 | 65.2 | 65.5 | 66.7 |
| $Al_2O_3$ | 3.6 | 3.5 | 3.7 | 4.3 | 3.8 | 3.7 | 3.8 |
| MgO | 13.7 | 13.4 | 13.9 | 13.5 | 14.3 | 13.6 | 13.8 |
| CaO | 6.2 | 6.4 | 6.4 | 6.4 | 6.3 | 6.9 | 5.4 |
| $Na_2O$ | 2.3 | 2.2 | 2.5 | 2.2 | 2.4 | 2.3 | 2.3 |
| $K_2O$ | 4.2 | 4.1 | 3.8 | 3.6 | 4.3 | 4.3 | 4.2 |
| BaO | 1.0 | 1.0 | 1.0 | 0.9 | 1.0 | 1.0 | 1.1 |
| $P_2O_5$ | 1.1 | 1.0 | 1.2 | 0.7 | 1.2 | 1.2 | 1.2 |
| $As_2O_3$ | 0.25 | - | - | - | - | - | - |
| $Fe_2O_3$ | 0.18 | - | - | - | - | - | - |
| F | 2.6 | 2.5 | 2.7 | 2.9 | 2.6 | 2.6 | 2.6 |
| R | 0.72 | 0.71 | 0.78 | 0.87 | 0.75 | 0.74 | 0.77 |

6

## Table I (concluded)

| | 8 | 9 | 10 | 11 | 12 | 13 | 14 |
|---|---|---|---|---|---|---|---|
| $SiO_2$ | 66.7 | 66.6 | 68.0 | 67.1 | 66.0 | 65.0 | 64.6 |
| $Al_2O_3$ | 3.5 | 3.9 | 5.0 | 5.0 | 3.6 | 5.0 | 3.4 |
| MgO | 13.8 | 13.6 | 13.3 | 13.3 | 14.6 | 13.6 | 14.6 |
| CaO | 6.8 | 6.8 | 6.4 | 6.4 | 5.0 | 6.5 | 7.1 |
| $Na_2O$ | 1.9 | 2.3 | 2.2 | 2.2 | 2.3 | 2.2 | 2.3 |
| $K_2O$ | 3.1 | 4.1 | 3.4 | 3.4 | 3.5 | 4.1 | 3.9 |
| BaO | 1.0 | - | - | 0.9 | 0.9 | 1.0 | 0.9 |
| $P_2O_5$ | 1.5 | 1.2 | - | - | 2.1 | 1.0 | 1.5 |
| F | 3.0 | 2.6 | 3.0 | 3.0 | 3.5 | 2.7 | 3.0 |
| R | 1.0 | 0.80 | 0.89 | 0.89 | 0.98 | 0.95 | 0.79 |

| | 15 | 16 | 17 | 18 | 19 |
|---|---|---|---|---|---|
| $SiO_2$ | 67.8 | 67.0 | 66.8 | 65.4 | 65.9 |
| $Al_2O_3$ | 2.6 | 3.4 | 3.8 | 3.7 | 3.7 |
| MgO | 13.6 | 13.3 | 12.8 | 13.8 | 13.5 |
| CaO | 6.2 | 6.2 | 6.3 | 6.3 | 6.4 |
| $Na_2O$ | 2.2 | 2.1 | 2.2 | 2.7 | 3.2 |
| $K_2O$ | 4.1 | 4.1 | 4.3 | 4.3 | 3.5 |
| BaO | 0.9 | 0.9 | 1.0 | 1.0 | 0.9 |
| $P_2O_5$ | 1.0 | 1.0 | 1.2 | 1.2 | 1.4 |
| F | 2.7 | 3.5 | 2.7 | 2.7 | 2.6 |
| R | 0.57 | 0.71 | 0.77 | 0.70 | 0.76 |

In order to determine the resistance of each composition to thermal deformation, bars measuring 9 cm long, 1 cm wide, and 5 mm thick are cut from the annealed glass bars. These bars are then placed on a ceramic support having a span gap of 6.8 cm and introduced into an electrically-heated furnace operating at 720°C. The temperature is then raised up to 800°C at a rate of about 5°C/minute; the temperature is then raised up to 1000°C at a rate of about 16°C/minute; this temperature is maintained for 15 minutes; then the electric current of the furnace is cut off and the furnace left to cool to 800°C at a proper rate (about 10°C/minute); and thereafter the samples are withdrawn from the furnace.

Table II furnishes the results of various measurements conducted on the crystallized samples. For example:

The degree of sag (Sag) suffered by the 5 mm thick bars was determined. Experience of thermal deformation suffered by table plates of 28 cm has shown that a thermal sag of 0.75 mm in the above test is the maximum that can be tolerated in order to permit the crystallization in situ of these plates without the use of formers.

The opacity was evaluated by measuring the diffuse transmission of crystallized samples having a thickness of 2.75 mm. Opacity is inversely proportional to the diffuse transmittance. The diffuse transmission (Diff.) values indicated in Table II reflect an arbitrary scale. On this scale English Wedgwood porcelains exhibit diffuse transmissions included in the interval of 90-110. It has been arbitrarily estimated that the diffuse transmission should be less than 180 to be acceptable for table articles.

Moduli of rupture (MOR) were measured on abraded samples using techniques conventional in the art. The values are indicated in terms of MPa.

The opalization liquidus temperature (Opal) in °C, i.e., the phase separation liquidus, was estimated by following the amount of light reflected by the glass during cooling of the melt. The viscosity (Vis.) of the glass, in Pa.s, at that temperature was determined from a viscosity curve measured on the melt in the conventional manner.

The crystallization liquidus temperature (Cryst.) in °C was determined by conventional methods; the samples were subjected to isothermal treatments, then observed with an optical microscope. Again, the viscosity of the glass in Pa.s at that temperature was determined from a conventional viscosity curve measured on the glass.

## Table II

|         | 1    | 2    | 3    | 4    | 5    | 6   | 7   |
|---------|------|------|------|------|------|-----|-----|
| Sag     | 0.25 | 0.25 | 0.25 | 0.25 | 0.25 | 0.5 | 0.5 |
| Diff.   | 130  | 153  | 150  | 109  | 145  | 141 | 180 |
| MOR     | -    | 83   | -    | 83   | -    | -   | -   |
| Opal    |      |      |      |      |      |     |     |
| Temp.   | -    | 1160 | -    | 1220 | -    | -   | -   |
| Vis.    | -    | 600  | -    | 220  | -    | -   | -   |
| Cryst.  |      |      |      |      |      |     |     |
| Temp.   | -    | 1220 | -    | 1240 | -    | -   | -   |
| Vis.    | -    | 200  | -    | 160  | -    | -   | -   |

## Table II (concluded)

|        | 8    | 9    | 10   | 11   | 12   | 13   |
|--------|------|------|------|------|------|------|
| Sag    | 0.25 | 0.25 | 0.25 | 0.5  | 0.25 | 0.25 |
| Diff.  | 60   | 138  | 150  | 100  | -    | 100  |
| MOR    | 76   | -    | -    | -    | -    | 76   |
| Opal   |      |      |      |      |      |      |
| Temp.  | 1380 | 1200 | -    | 1200 | -    | 1240 |
| Vis.   | 30   | 240  | -    | 280  | -    | 140  |
| Cryst. |      |      |      |      |      |      |
| Temp.  | 1220 | 1220 | -    | 1240 | -    | 1240 |
| Vis.   | -    | 180  | -    | 160  | -    | 140  |

|        | 14   | 15   | 16   | 17   | 18   | 19   |
|--------|------|------|------|------|------|------|
| Sag    | 0.25 | 1    | 3    | 1    | 0.75 | 0.5  |
| Diff.  | 165  | 316  | 242  | 275  | 295  | 254  |
| MOR    | 83   | -    | -    | -    | -    | -    |
| Opal   |      |      |      |      |      |      |
| Temp.  | 1240 | 1140 | 1280 | -    | -    | -    |
| Vis.   | 90   | -    | 90   | -    | -    | -    |
| Cryst. |      |      |      |      |      |      |
| Temp.  | 1220 | -    | -    | -    | -    | -    |
| Vis.   | 120  | -    | -    | -    | -    | -    |

Example 1 closely approximates the color of English Wedgwood porcelain. One measurement conducted through diffuse reflection with a white background on samples 3.8 mm thick gave color coordinates (Illuminant C) x = 0.3135, y = 0.3233, and Y = 86% for Example 1, and x = 0.3139, y = 0.3232, and Y = 86% for a sample of English Wedgwood porcelain.

Examples 1-7 are encompassed within the preferred composition region. Examples 8-14 reside within the operable composition area, but are outside the preferred region. Examples 15-19 are located outside the specified limits. To be precise:

The $Al_2O_3$ content in Example 15 is too low; the F content in Example 16 is too high; and the amount of MgO in Example 17 is insufficient. Each of those examples exhibits excessive thermal sagging and a strong diffuse transmission.

The total $Na_2O + K_2O$ content is too high in Example 18 and the amount of $Na_2O$ in Example 19 is excessive. These two examples exhibit a strong diffuse transmission.

**Claims**

1. A highly crystalline glass-ceramic article characterized in that potassium fluorrichterite constitutes essentially the sole crystal phase and that, in the form of bars measuring 9 cm X 1 cm X 5 mm, will exhibit sagging during the crystallization heat treatment not greater than 0.75 mm over a span of 6.8 cm, said glass-ceramic article having a composition essentially free of $Li_2O$ and consisting essentially, as expressed in terms of weight percent on the oxide basis, of:

| | | | |
|---|---|---|---|
| $SiO_2$ | 61-70 | $Na_2O$ | 1.5-3 |
| $Al_2O_3$ | 2.75-7 | $K_2O$ | 2.5-5 |
| MgO | 12.5-16 | $Na_2O+K_2O$ | <7 |
| CaO | 4.75-9 | F | 2-4 |

2. A glass ceramic article according to claim 1 characterized in that it consists essentially of:

| | | | |
|---|---|---|---|
| $SiO_2$ | 63-68 | $K_2O$ | 3.5-4.75 |
| $Al_2O_3$ | 3-4.75 | $Na_2O+K_2O$ | <6.75 |
| MgO | 13-15 | BaO | 0.25-1.25 |
| CaO | 5.25-7.5 | $P_2O_5$ | 0.5-1.5 |
| $Na_2O$ | 2-2.75 | F | 2.25-3.25 |

3. A glass-ceramic article according to claim 1 characterized in that it also contains up to 0.5% $Fe_2O_3$ and up to 1% total of at least one metal oxide selected from the group consisting of $CeO_2$, CoO, $Cr_2O_3$, CuO, $MnO_2$, NiO, $TiO_2$, and $V_2O_5$.

4. A thermally crystallized glass characterized in that it is capable of being crystallized in situ in a period of two hours to form a highly crystalline glass-ceramic article containing potassium fluorrichterite as essentially the sole crystal phase and which, in the form of bars measuring 9 cm X 1 cm X 5 mm, will exhibit sagging during the crystallization heat treatment not greater than 0.75 mm over a span of 6.8 cm, said glass-ceramic article having a composition essentially free of $Li_2O$ and consisting essentially, as expressed in terms of weight percent on the oxide basis, of:

| | | | |
|---|---|---|---|
| $SiO_2$ | 61-70 | $Na_2O$ | 1.5-3 |
| $Al_2O_3$ | 2.75-7 | $K_2O$ | 2.5-5 |
| MgO | 12.5-16 | $Na_2O+K_2O$ | <7 |
| CaO | 4.75-9 | F | 2-4 |

5. A thermally crystallizable glass according to claim 4 characterized in that said glass-ceramic consists essentially of:

| | | | |
|---|---|---|---|
| $SiO_2$ | 63-68 | $K_2O$ | 3.5-4.75 |
| $Al_2O_3$ | 3-4.75 | $Na_2O+K_2O$ | <6.75 |
| MgO | 13-15 | BaO | 0.25-1.25 |
| CaO | 5.25-7.5 | $P_2O_5$ | 0.5-1.5 |
| $Na_2O$ | 2-2.75 | F | 2.25-3.25 |

6. A thermally crystallizable glass according to claim 4 characterized in that it also contains up to 0.5% $Fe_2O_3$ and up to 1% total of at least one metal oxide selected from the group consisting of $CeO_2$, CoO, $Cr_2O_3$, CuO, $MnO_2$, NiO, $TiO_2$, and $V_2O_5$.

7. A method for making a highly crystalline glass-ceramic article containing potassium fluorrichterite as essentially the sole crystal phase and which, in the form of bars measuring 9 cm X 1 cm X 5 mm, exhibit sagging during the crystallization heat treatment of not greater than 0.75 mm over a span of 6.8 cm, characterized in that it comprises the steps consisting of:

(a) melting a vitrifiable batch essentially free of $Li_2O$ consisting essentially, as expressed in terms of weight percent on the oxide basis, of:

| | | | |
|---|---|---|---|
| $SiO_2$ | 61-70 | $Na_2O$ | 1.5-3 |
| $Al_2O_3$ | 2.75-7 | $K_2O$ | 2.5-5 |
| MgO | 12.5-16 | $Na_2O+K_2O$ | <7 |
| CaO | 4.75-9 | F | 2-4 |

(b) cooling the resultant melt to a temperature located below the transformation range and simultaneously forming a glass article having a desired configuration; and

(c) exposing said glass article to a temperature between about 950°-1050°C during a period of time sufficient to promote the growth of crystals in situ.

8. A method according to claim 7 characterized in that said glass-ceramic consists essentially of:

| | | | |
|---|---|---|---|
| $SiO_2$ | 63-68 | $K_2O$ | 3.5-4.75 |
| $Al_2O_3$ | 3-4.75 | $Na_2O+K_2O$ | <6.75 |
| MgO | 13-15 | BaO | 0.25-1.25 |
| CaO | 5.25-7.5 | $P_2O_5$ | 0.5-1.5 |
| $Na_2O$ | 2-2.75 | F | 2.25-3.25 |

9. A method according to claim 7 characterized in that the vitrifiable batch also contains up to 1% by weight of $As_2O_3$ and/or $Sb_2O_3$.

10. A method according to claim 7 characterized in that the vitrifiable batch also contains a small quantity of an oxidizing agent.

11. A method according to claim 7 characterized in that said period of exposure to a temperature between about 950°-1050°C is at most about 30 minutes.

12. A method according to claim 7 characterized in that the glass-ceramic also contains up to 0.5% $Fe_2O_3$ and up to 1% total of at least one metal oxide selected from the group consisting of $CeO_2$, CoO, $Cr_2O_3$, CuO, $MnO_2$, NiO, $TiO_2$, and $V_2O_5$.

11

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-4 608 348 (G.H. BEALL)<br>* Claims; column 6, lines 66,67 *<br>--- | 1-12 | C 03 C 10/16 |
| X,D | US-A-4 467 039 (G.H. BEALL)<br>* Claim 1; table 1 *<br>----- | 1-13 | |
| | | | **TECHNICAL FIELDS SEARCHED (Int. Cl.4)**<br><br>C 03 C 10/00 |

The present search report has been drawn up for all claims

| Place of search | Date of completion of the search | Examiner |
|---|---|---|
| THE HAGUE | 11-01-1988 | BOUTRUCHE J.P.E. |

EPO FORM 1503 03.82 (P0401)